# EUROPEAN PATENT SPECIFICATION

(11) **EP 3 910 877 B1**
(45) Date of publication and mention of the grant of the patent: **08.03.2023**
(21) Application number: 21190439.6
(22) Date of filing: 09.08.2021
(51) Int. Cl.: G06F 21/64, H04L 9/32

(54) **EVM-BASED TRANSACTION PROCESSING METHOD AND APPARATUS, DEVICE, PROGRAM AND MEDIUM**
VERFAHREN UND VORRICHTUNG ZUR VERARBEITUNG VON EVM-BASIERTEN TRANSAKTIONEN, VORRICHTUNG, PROGRAMM UND MEDIUM
PROCÉDÉ ET APPAREIL DE TRAITEMENT DE TRANSACTIONS BASÉES SUR EVM, DISPOSITIF, PROGRAMME ET SUPPORT

(30) Priority: 24.12.2020 CN 202011543553
(43) Date of publication of application: 17.11.2021
(73) Proprietor: Beijing Baidu Netcom Science and Technology Co., Ltd., Beijing 100085 (CN)
(72) Inventor: ZHANG, Lei, BEIJING, 100085 (CN); FAN, Bingxin, BEIJING, 100085 (CN); ZHENG, Qi, BEIJING, 100085 (CN); XIAO, Wei, BEIJING, 100085 (CN)
(74) Representative: Regimbeau

(56) References cited:
- US-A1- 2020 167 840
- US-A1- 2020 322 129

## Description

### TECHNICAL FIELD

The present application relates to the field of computer technologies and, in particular, blockchain technologies. Specifically, the present disclosure relates to an Ethereum Virtual Machine (EVM)-based transaction processing method and apparatus, a device, a program and a medium.

### BACKGROUND

A blockchain is a new application mode of computer technologies such as distributed data storage, point-to-point transmission, a consensus mechanism and an encryption algorithm. Being public, transparent and non-tamperable, the blockchain is more and more widely applied in the fields of finance, traceability, insurance and the like.

Blockchain technologies are continuously developed from the earliest bitcoin system to Ethereum. In recent years, many blockchain systems using better technologies have emerged gradually, for example, new blockchain technologies based on the Proof of Stake (PoS) consensus mechanism, such as Polkadot and Cosmos. In the field of blockchain applications, regardless of continuously upgraded and updated technologies, the ecological environment based on Ethereum technologies has already possessed a certain scale. Many blockchain applications are constructed based on smart contracts of Ethereum. Application developers and users are somewhat accustomed to using the smart contracts of Ethereum.

However, with technological progress, some deficiencies of Ethereum have been exposed, such as an inefficient consensus algorithm, so that the deal performance of Ethereum is insufficient to support large-scale commercial application scenarios. Considering the ecological effect of Ethereum, Ethereum cannot be directly discarded and a system capable of being compatible with Ethereum and other blockchain technologies is more in demand. The smart contracts of Ethereum are implemented based on Ethereum Virtual Machines (EVMs) so that the problem of migration of EVMs to another blockchain system needs to be addressed for compatibility with Ethereum and other blockchain technologies.

Further relevant technologies are also known from US 2020/322129 A1 and US 2020/167840 A1.

### SUMMARY

The present disclosure provides an Ethereum Virtual Machine-based transaction processing method and apparatus, a device, a program and a medium. The features of the method and apparatus according to the present invention are defined in the independent claims. Further improvements are provided in the dependent claims.

According to an aspect of the present disclosure, an Ethereum Virtual Machine-based transaction processing method is provided. The method is applied to a blockchain node and includes steps described below.

A virtual machine instance running in the blockchain node acquires a to-be-processed transaction request.

In a process of executing the to-be-processed transaction request, the virtual machine instance generates a data access request for an intra-contract variable and transmits the data access request to an interface module, and the data access request includes a data read request and/or a data write request.

The interface module performs instruction conversion according to the data access request to determine an intra-contract variable access interface corresponding to a function of the data access request.

The interface module calls the intra-contract variable access interface for a contract space in a data storage space of a blockchain to access intra-contract variables in the contract space and feeds back an access result to the virtual machine instance.

The intra-contract variable includes a parameter variable and a variable value in a smart contract, and the intra-contract variables in the contract space are used for updating on-chain data of the blockchain.

According to another aspect of the present disclosure, an Ethereum Virtual Machine-based transaction processing apparatus is provided. The apparatus is applied to a blockchain node and includes a to-be-processed transaction request acquisition module, a data access request generation and transmission module, an instruction conversion module and an intra-contract variable access interface calling module.

The to-be-processed transaction request acquisition module is configured to cause a virtual machine instance running in the blockchain node to acquire a to-be-processed transaction request.

The data access request generation and transmission module is configured to: in a process of executing the to-be-processed transaction request, cause the virtual machine instance to generate a data access request for intra-contract variables and transmit the data access request to an interface module, where the data access request includes a data read request and/or a data write request.

The instruction conversion module is configured to cause the interface module to perform instruction conversion according to the data access request to determine an intra-contract variable access interface corresponding to a function of the data access request.

The intra-contract variable access interface calling module is configured to cause the interface module to call the intra-contract variable access interface for a contract space in a data storage space of a blockchain to access the intra-contract variables in the contract space and feed back an access result to the virtual machine instance.

The intra-contract variable includes a parameter variable and a variable value in a smart contract, and the intra-contract variables in the contract space are used for updating on-chain data of the blockchain.

According to another aspect of the present disclosure, an electronic device is provided. The electronic device includes at least one processor and a memory communicatively connected to the at least one processor.

The memory stores an instruction executable by the at least one processor, and the instruction is executed by the at least one processor to enable the at least one processor to perform the Ethereum Virtual Machine-based transaction processing method of any one of embodiments of the present disclosure.

According to another aspect of the present disclosure, a non-transitory computer-readable storage medium is provided, which stores a computer instruction configured to cause a computer to perform the Ethereum Virtual Machine-based transaction processing method of any one of embodiments of the present disclosure.

According to another aspect of the present disclosure, a computer program product is provided. The computer program product includes a computer program which, when executed by a processor, implements the Ethereum Virtual Machine-based transaction processing method of any one of embodiments of the present disclosure.

The problem of migration of an Ethereum Virtual Machine to another blockchain system is solved and the compatibility with Ethereum and other blockchain technologies is improved according to the technologies of the present disclosure.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present application. In the drawings:
FIG. 1 is a schematic diagram of an Ethereum Virtual Machine-based transaction processing method according to an embodiment of the present disclosure;
FIG. 2 is a schematic diagram of another Ethereum Virtual Machine-based transaction processing method according to an embodiment of the present disclosure;
FIG. 3 is a schematic diagram of another Ethereum Virtual Machine-based transaction processing method according to an embodiment of the present disclosure;
FIG. 4 is a schematic diagram of an Ethereum Virtual Machine-based transaction processing flow according to an embodiment of the present disclosure;
FIG. 5 is a schematic diagram of an Ethereum Virtual Machine-based transaction processing apparatus according to an embodiment of the present disclosure; and
FIG. 6 is a block diagram of an electronic device for implementing an Ethereum Virtual Machine-based transaction processing method according to an embodiment of the present disclosure.

### DETAILED DESCRIPTION

Example embodiments of the present disclosure, including details of embodiments of the present disclosure, are described hereinafter in conjunction with the drawings to facilitate understanding. The example embodiments are merely illustrative. Therefore, it will be appreciated by those having ordinary skill in the art that various changes and modifications may be made to the embodiments described herein without departing from the scope of the present disclosure. Similarly, description of well-known functions and constructions is omitted hereinafter for clarity and conciseness.

The blockchain is a new application mode of computer technologies such as the distributed data storage, the point-to-point transmission, the consensus mechanism and the encryption algorithm. A blockchain appearing earliest is an important concept of bitcoins and essentially a decentralized database. As an underlying technology of bitcoins, the blockchain is a series of data blocks generated in association with each other by using a cryptographic method, where each data block contains information about a batch of bitcoin network deals and is used for verifying the validity of the information and generating the next block. Because of being public, transparent and non-tamperable, the blockchain is more and more widely applied in the fields of finance, traceability, insurance and the like. In particular, the blockchain can achieve efficient cooperation between various financial institutions in the field of finance.

The blockchain technology appears earliest in the age of digital currency represented by bitcoins. With the continuous development of the blockchain technology, Ethereum combining the digital currency with smart contracts emerges. The blockchain was upgraded from an original "global ledger" to a "global computer" and is the decentralization of the entire market. Ethereum is an application that combines the digital currency with the smart contracts and optimizes a wider range of scenarios and flows in the field of finance. The biggest upgrade is the presence of smart contracts. Ethereum is located on an application platform on which the smart contracts can be uploaded and executed, and the execution of contracts can be effectively guaranteed.

Large-scale commercial application scenarios tend to be supported by an efficient consensus algorithm. However, the consensus of early blockchain technologies such as bitcoins and Ethereum results in insufficient deal performance to support these scenarios. In the field of blockchain applications, the ecology of Ethereum is of greatest significance, and thus many blockchain applications depend on the ecology of Ethereum. Not only CryptoKitties in the field of games but also Dai, a decentralized finance (DeFi) project, in the field of finance are constructed based on the smart contracts of Ethereum.

A virtual machine specifically used for executing the smart contracts of Ethereum is referred to as an Ethereum Virtual Machine (EVM). The smart contracts of Ethereum may be written in languages such as Solidity and Viper. The smart contracts of Ethereum and EVMs are widely applied in the field of blockchains and have become one of factual standards in the field of blockchain smart contracts.

If the EVM is applied in another blockchain system based on a modification of source codes of Ethereum, the EVM is inherently bound to a blockchain data storage mode and access mode so that a migration solution is not universal and the migrated EVM is more bound to the chain itself and difficult to be applicable to the migration of the EVM to another chain.

The present application provides an Ethereum Virtual Machine-based transaction processing method. A modular design is integrated and an Ethereum Virtual Machine is migrated as a module into a modular blockchain system, for example, a blockchain to which the modular design is introduced, such as XuperChain and Cosmos so that block data is isolated from execution logics. The method in the embodiment of the present application can make full use of the technical ecology and application ecology of Ethereum, which greatly facilitates the application migration of various decentralized applications (Dapps) in the ecology of Ethereum. Meanwhile, the method can also exploit the technical advantages of other blockchain systems to the full.

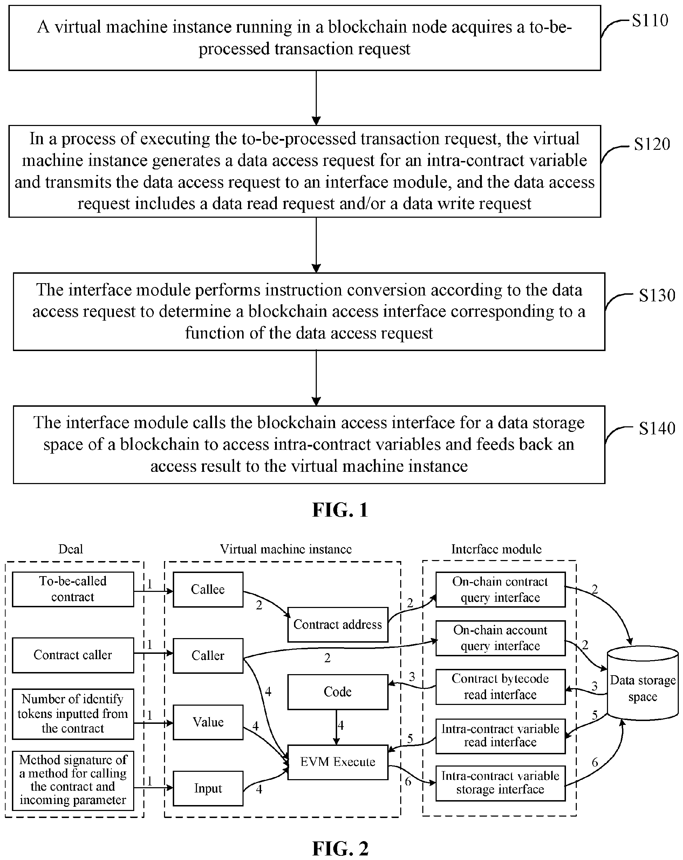

FIG. 1 is a schematic diagram of an Ethereum Virtual Machine-based transaction processing method according to an embodiment of the present application. This embodiment is applicable to the case where an Ethereum Virtual Machine is migrated to another blockchain system for transaction processing, so as to solve the problem of migration of the Ethereum Virtual Machine to another blockchain system and improve the compatibility with Ethereum and other non-Ethereum blockchain technologies. The Ethereum Virtual Machine-based transaction processing method disclosed in this embodiment may be executed by an Ethereum Virtual Machine-based transaction processing apparatus. The apparatus may be implemented by software and/or hardware and configured in an electronic device having computing and storage functions. The electronic device is a blockchain node. A blockchain network is a network composed of multiple blockchain nodes and running in a distributed mode. The method provided by the embodiment of the present application may be performed by any blockchain node.

Referring to FIG. 1, the Ethereum Virtual Machine-based transaction processing method provided in this embodiment includes steps described below.

In S 110, a virtual machine instance running in the blockchain node acquires a to-be-processed transaction request.

The blockchain node is deployed with a virtual machine program. In response to a running requirement, one or more virtual machine instances may be created for executing computing logics of a smart contract based on an instruction set of the Ethereum Virtual Machine.

The to-be-processed transaction request is a transaction request sent by another blockchain node or submitted by a user at the blockchain node for operations on data on a blockchain. In an embodiment of the present application, the transaction request may be any transaction request supported in the blockchain system and may be a business transaction request, a management transaction request or the like. The to-be-processed transaction request may be a data read request, a data write request or the like for the data on the blockchain.

After acquiring the to-be-processed transaction request, the blockchain node executes the to-be-processed transaction request by running the virtual machine instance.

In S 120, in a process of executing the to-be-processed transaction request, the virtual machine instance generates a data access request for an intra-contract variable and transmits the data access request to an interface module, where the data access request includes a data read request and/or a data write request.

The intra-contract variable refers to variables included in the smart contract and data inputted into the variables during the execution of the smart contract as well as intermediate variables generated during the execution of the smart contract. Specifically, the data access request for the intra-contract variable is generated in the process of the virtual machine instance executing the to-be-processed transaction request according to a contract bytecode and an input parameter in the to-be-processed transaction request. The contract bytecode refers to a binary file that is obtained after the smart contract is compiled and composed of a sequence of op codes/data pairs, and the contract bytecode includes an execution program and is an intermediate code.

The input parameter in the to-be-processed transaction request includes a contract parameter and a token. The token refers to a certificate of rights and interests in a digital form and represents an inherent and intrinsic value. The token is capable of representing all certificates of rights and interests that can be digitalized. Exemplarily, the token may be a certificate of rights and interests such as currents, bonds, account items, ownership or qualifications. In the process of acquiring the to-be-processed transaction request and initiating an execution, the virtual machine instance generally generates a requirement for reading/writing (accessing) blockchain data. A data storage space for storing data is provided in the blockchain system. The data is divided into on-chain data and local data. The on-chain data refers to data added to blocks and stored by each node. The local data is data stored locally by each node according to the content of the on-chain data and a local index requirement. The local data stored by each node may be different. The intra-contract variable refers to data involved by the to-be-processed transaction request and may be the on-chain data or the local data.

That is to say, not all intra-contract variables need to be stored on the chain. The intra-contract variable includes intermediate values generated in a process of executing the contract, and these intermediate values may be covered by other values generated in the process of executing the contract. Exemplarily, a smart contract with a billing accumulation function includes variables A and B, where A is an existing amount and B is an amount accumulated this time. In different deals, A and B have different values. For example, a user initiates a deal in which B (2 dollar) is accumulated on the basis of A (10 dollar). Then, in the above example, A and B are variables, 10 and 2 are values of the variables, and A, B and the values 10 and 2 corresponding to A and B are all intra-contract variables and need to be recorded in a contract space. The variable values corresponding to the variables A and B may change in the process of executing the smart contract. Generally, the variable values in the process are not stored on the chain while the variables A and B and the final variable values corresponding to these two variables are stored on the chain.

The data access request is a request for accessing data. The data access request includes the data read request and/or the data write request. The data read request refers to reading the data from the data storage space of the blockchain, and the data write request refers to writing the data into the data storage space of the blockchain. The virtual machine instance generates the data access request for intra-contract variables in the process of executing the to-be-processed transaction request, and the data access request specifically includes an intra-contract variable read request and an intra-contract variable storage request. The intra-contract variable read request refers to a request for reading an intra-contract variable from the data storage space of the blockchain, and the intra-contract variable storage is a request for storing an intra-contract variable in the data storage space of the blockchain.

The virtual machine instance of Ethereum has a set instruction set and generates an instruction to read/write data in the process of executing the to-be-processed transaction request, so as to express the data access request.

In the embodiment of the present application, since a target blockchain system to which the virtual machine is migrated does not support the blockchain data to be read and written through a virtual machine instruction, the interface module is provided to parse and convert the data access request expressed by the virtual machine instance through the instruction so that an interface capable of accessing the blockchain data is formed. The virtual machine instance transmits the generated data access request for the intra-contract variable to the interface module.

In an optional embodiment, an intra-contract variable storage interface and an intra-contract variable read interface each are a blockchain access interface, and the blockchain access interface further includes at least one of the following blockchain write interfaces: a contract account creation interface, a contract bytecode initialization interface or a contract account deletion interface.

The contract account creation interface is used for creating a contract account in a contract space. The contract bytecode initialization interface is used for initializing a contract bytecode in the contract space. The contract account deletion interface is used for deleting the contract account in the contract space.

In S130, the interface module performs instruction conversion according to the data access request to determine the blockchain access interface corresponding to a function of the data access request.

The interface module is configured to perform the instruction parse and conversion on the data access request. The interface module is provided with multiple blockchain access interfaces for implementing various reading and writing functions for data in the data storage space. An interface is actually a program that is capable of performing data reading, writing, computing or the like once or more times and also calling another interface according to a set program.

Since the data access request generated by the virtual machine instance is in the form of an Ethereum Virtual Machine instruction and cannot be directly identified by a data storage system that does not support Ethereum, the interface module needs to perform the instruction conversion on a data access instruction.

Different data access requests differ in terms of operations on on-chain data in that functions corresponding to the data access requests are different. Therefore, different data access requests may correspond to different blockchain access interfaces. Specifically, when data access requests are the data read request and the data write request, the data access requests correspond to different blockchain access interfaces, respectively.

In an optional embodiment, the intra-contract variable access interface includes the intra-contract variable storage interface and the intra-contract variable read interface.

The intra-contract variable read interface is used for reading an intra-contract variable in contract data. The intra-contract variable storage interface is used for storing an intra-contract variable.

In the case where the data access request generated by the virtual machine instance for the intra-contract variable is the intra-contract variable read request, the interface module performs the instruction conversion according to the intra-contract variable read request to determine the blockchain access interface corresponding to a function of the intra-contract variable read request to be the intra-contract variable read interface.

In the case where the data access request generated by the virtual machine instance for the intra-contract variable is the intra-contract variable storage request, the interface module performs the instruction conversion according to the intra-contract variable storage request to determine the blockchain access interface corresponding to a function of the intra-contract variable storage request to be the intra-contract variable storage interface.

In an embodiment, the step in which the interface module performs the instruction conversion according to the data access request to determine the blockchain access interface corresponding to the function of the data access request includes steps described below.

In step 1, the interface module identifies a virtual machine instruction to which the data access request belongs and an instruction parameter.

The virtual machine instruction and the instruction parameter are generated when the virtual machine instance executes the to-be-processed transaction request. The instruction parameter is a parameter variable included in the virtual machine instruction. The execution of the virtual machine instruction is capable of implementing access to the intra-contract variable. The data access request may be a read request and/or a write request for the contract data and the account data.

Since the smart contracts of Ethereum are developed through Geth which is a client of Ethereum in Go language and a necessary tool for the development of the smart contracts of Ethereum, instruction account operation instructions provided by Geth are generally used to manage accounts in Ethereum. Exemplarily, the virtual machine instruction and the instruction parameter corresponding to the data access request may be an account list instruction (geth account list), an account update instruction (geth account update) or an account creation instruction (personal.newAccount ('Your Password')). The specific contents in both the virtual machine instruction to which the data access request belongs and the instruction parameter are not limited herein and are determined according to actual cases.

In step 2, the interface module determines the blockchain access interface corresponding to the data access request according to a preset mapping relationship between virtual machine instructions and interfaces.

An interface mapping relationship refers to a correspondence between virtual machine instructions and blockchain access interfaces. The interface mapping relationship is preconfigured in the interface module by the user according to actual cases.

Since the data access request is directly related to the virtual machine instruction, the blockchain access interface corresponding to the data access request may be determined according to the virtual machine instruction and the interface mapping relationship on the premise that the interface mapping relationship is known.

To avoid a redundant mapping relationship, in an optional embodiment, one or more virtual machine instructions have an interface mapping relationship with one blockchain access interface.

That is to say, one blockchain access interface corresponds to at least one virtual machine instruction. Different virtual machine instructions may correspond to the same blockchain access interface. An interface mapping relationship between at least one virtual machine instruction and one blockchain access interface is essentially a correspondence between intra-contract variables corresponding to the virtual machine instruction and data corresponding to the blockchain access interface in the data storage space.

In S 140, the interface module calls the blockchain access interface for the data storage space of the blockchain to access the intra-contract variables and feeds back an access result to the virtual machine instance. The intra-contract variables exist in the data storage space of the blockchain. Optionally, different data structures may be supported in the data storage space, and the data structures are determined by settings of the blockchain system itself. For example, in the blockchain system, accounts, logs or transaction data records, smart contracts and the like generally need to be set and rights data and the like may also be set. The intra-contract variables may have any data structure for accessing.

Optionally, the data storage space of the blockchain includes an account space and the contract space, the account space is used for storing account data in an external account and account data in a contract account, and the contract space is used for storing contract data in the contract account. The intra-contract variables are contract data.

The external account and the contract account are typically set in Ethereum. The external account is an account controlled by a key. The contract account is an account controlled by a contract code. The external account and the contract account each include basic on-chain data of the account. The contract data in the contract account refers to data related to a smart contract. No contract data exists in the external account. Both the external account and the contract account are stored through a data structure of an account type in Ethereum. If the target blockchain system of migration does not support the contract account including a smart contract code, preferably, the account space and the contract space are separately provided to store two different types of data in isolation.

By calling the blockchain access interface, the interface module can implement an access operation on data in the account space and the contract space of the blockchain, that is, implement a read operation and/or a write operation on the account data and the contract data and obtain an access result corresponding to the data. The interface module feeds back the access result to the virtual machine instance. The access result may be the specifically read data, or an access state of whether the access succeeds may be fed back.

In the case where the data access request for the intra-contract variable is the intra-contract variable read request, the interface module calls the intra-contract variable read interface for the contract space of the blockchain, reads a value of the intra-contract variable, and feeds back the read value to the virtual machine instance.

After receiving the intra-contract variable read request, the interface module determines the contract space where the intra-contract variables are stored according to the intra-contract variable read request, calls the intra-contract variable read interface for the contract space of the blockchain to read an intra-contract variable of a to-be-called contract, and feeds back the read intra-contract variable to the virtual machine instance.

The virtual machine instance generates a data processing result in the process of executing the to-be-processed transaction request. If the data processing result needs to be stored into the contract space, the virtual machine instance generates the intra-contract variable storage request and transmits the intra-contract variable storage request to the interface module. The interface module performs the instruction conversion according to the data access request to determine the intra-contract variable storage interface corresponding to the intra-contract variable storage request. The interface module calls the intra-contract variable storage interface for the contract space of the blockchain to write values of intra-contract variables.

Specifically, after receiving the intra-contract variable storage request, the interface module determines a target contract space for the intra-contract variable according to the intra-contract variable storage request and calls the intra-contract variable storage interface for the contract space of the blockchain to write the values of the intra-contract variables into the contract space. According to the technical solution in the embodiment of the present application, when the Ethereum Virtual Machine is migrated to another blockchain system for transaction processing, the interface module is constructed to perform the instruction conversion on the data access request in the form of the Ethereum Virtual Machine instruction and determine the blockchain access interface corresponding to the function of the data access request so that a heterogeneous data storage space can be accessed. Therefore, the blockchain is open and componentized, thereby reducing the difficulty in migrating the Ethereum Virtual Machine to another blockchain system. Additionally, in the embodiment of the present application, the contract data and the account data are stored separately on the blockchain, which is compatible with data storage structures of different types and facilitates operations of another blockchain on different data. In the embodiment of the present application, the interface module is constructed and the contract data and the account data are stored separately on the blockchain so that the problem of migration of the Ethereum Virtual Machine to another blockchain system is solved and the compatibility with Ethereum and other blockchain technologies is improved. In the embodiment of the present application, the virtual machine instance and the interface module coordinate with each other to jointly complete the to-be-processed transaction request so that intra-contract variable access operations between different blockchains are achieved, the problem of the migration of the Ethereum Virtual Machine to another blockchain system is solved, and the compatibility with Ethereum and other blockchain technologies is improved. In the embodiment of the present application, after the virtual machine instance executes the to-be-processed transaction request, the blockchain access interface may be called to update on-chain data of the blockchain according to the intra-contract variables in the contract space. The intra-contract variables in the contract space are variables updated in the process of executing the smart contract and generally intermediate data and final data in a transaction processing process. The final data may be stored on the chain through the blockchain access interface.

This embodiment is an optional solution provided based on the preceding embodiment. Specifically, this embodiment is a refinement of a method for storing the account data and the contract data in the data storage space of the blockchain.

It will be appreciated that the external account and the contract account are typically set in Ethereum. The external account is an account controlled by a key. The contract account is an account controlled by a contract code. The external account and the contract account each include basic on-chain data of the account. The contract data in the contract account refers to data related to a smart contract. No contract data exists in the external account. Both the contract account and the external account are stored in the data storage space of the blockchain.

The data storage space of the blockchain is used for supporting operations on data in at least two types of accounts, and account data in each of the accounts uses the same data structure.

The virtual machine instance generates a data read request and/or a data write request for data in the data storage space of the blockchain in the process of executing the to-be-processed transaction request for transaction data. Specifically, a data access operation is performed on data in the external account and the contract account in the data storage space of the blockchain. The external account uses the same data structure as the contract account in the data storage space. Optionally, both the external account and the contract account are stored through a data structure of an account type.

The data storage space of the blockchain includes the account space and the contract space. The account space is used for storing account data in the external account and account data in the contract account. The contract space is used for storing the contract data in the contract account. The intra-contract variable is the contract data.

In the case where an Ethereum Virtual Machine is migrated to another blockchain system, if a target blockchain system of migration does not support the contract account including smart-contract codes, preferably, the account space and the contract space are separately provided in the data storage space to store two different types of data in isolation.

Since the account data exists in both the external account and the contract account in Ethereum and the external account differs from the contract account in that the contract account includes the contract data in addition to the account data, to store the account data and the contract data in isolation, the account data in the external account and the account data in the contract account are stored in the account space and the contract data in the contract account is stored alone in the contract space.

In the process of executing the to-be-processed transaction request, the virtual machine instance generates the data access request for the intra-contract variable, that is, the data access request for the intra-contract variable in the contract space.

In an optional embodiment, the account data includes an account identifier, a deal sequence number, an account public key and a token.

Exemplarily, in the data storage space of the blockchain, the account data in the contract account and the external account may be stored using the following data structure:
type AccountData struct {
Address string
Sequence uint
Pubkey string
Balance uint }
where Address denotes the account identifier, Sequence denotes the deal sequence number, Pubkey denotes the account public key, and Balance denotes the token. The account identifier is a data call identifier of account data and may be an account address or an account name, and different account data has different account identifiers. The deal sequence number refers to data for recording the number of times deals have been made. The account public key refers to a public key for encrypting an account. The token refers to a certificate of rights and interests in a digital form and represents an inherent and intrinsic value. The token is capable of representing all certificates of rights and interests that can be digitalized. Exemplarily, the token may be a certificate of rights and interests such as currents, bonds, account items, ownership or qualifications.

To improve the management efficiency of the account data and the convenience to operate the account data, in an optional embodiment, the account data is stored in the form of a key-value pair. The account identifier is stored as a key value in a key field, and the deal sequence number, the account public key and the token are stored in a value field.

The account identifier as key information corresponds to three kinds of value information of the deal sequence number, the account public key and the token. In the case where the account data is operated by using the account identifier as the key value, the account identifier is used for indexing the account data. Through adding an account identifier of target account data to a data access instruction, a deal sequence number, an account public key and a token of the target account data may be acquired according to the account identifier.

In an optional embodiment, the contract data includes an account identifier, a contract bytecode and an intra-contract variable. The contract bytecode refers to a binary file that is obtained after the smart contract is compiled and is composed of a sequence of op codes/data pairs, and the contract bytecode includes an execution program and is an intermediate code. The intra-contract variable includes a variable name and a variable value. The account identifier of the contract account is a contract call identifier of a smart contract. Different smart contracts have different account identifiers. When a smart contract is called, the contract call identifier is added to the data access request, and the smart contract to be called may be determined according to the contract call identifier.

In the scenario where the contract data is operated, to improve the speed and accuracy of positioning the contract data, in an optional embodiment, the contract data is stored in the form of the key-value pair, a combination of the account identifier and a variable identifier serves as a key value of a key-value pair and is used for querying the key-value pair where a to-be-stored variable is located. Optionally, the account identifier is combined, as a prefix in a key value, with respective identifiers of the contract bytecode and the intra-contract variables to be stored in a key field; and the contract bytecode and the intra-contract variable are stored in a value field.

The key value includes the account identifier and the respective identifiers of the contract bytecode and the intra-contract variable. The account identifier is used as the prefix of the key value for distinguishing different contract data. After specific contract data is positioned, the contract data to be operated is further determined accurately according to the identifiers of the contract bytecode and the intra-contract variable in the key value.

The account identifier as key information corresponds to two kinds of value information of the contract bytecode and the intra-contract variable. In the case where the contract data is operated by using the account identifier as the key value, the account identifier is used for indexing the contract data. Through adding an account identifier of target contract data to the data access instruction, a contract bytecode and an intra-contract variable of the target contract data may be acquired according to the account identifier.

The account data and the contract data belonging to the same contract account have the same account identifier, and the account data is in one-to-one correspondence to the contract data. When the account data and the contract data in the contract account are operated, both the account data and the contract data are indexed through the key value. The key value for the account data includes only the account identifier, and the key value for the contract data is composed of the account identifier as the prefix and the respective identifiers of the contract bytecode and the intra-contract variable. Therefore, the key value for the account data may be distinguished from the identifiers of the contract data.

In the embodiment of the present application, the data storage space is divided into the account space and the contract space, the account data in the external account and the account data in the contract account are stored in the account space, and the contract data in the contract account is stored in the contract space so that the account data and the contract data are stored in isolation, improving the compatibility of data structures stored in different blockchain systems. The account data in the contract account and the account data in the external account have the same data structure, which reduces the difficulty in performing data operations between blockchains and reduces the difficulty in migration between blockchains at the same time.

This embodiment is an optimization of the preceding embodiments. Specifically, this embodiment is a refinement of the process of the virtual machine instance executing the to-be-processed transaction request in the case where the data access request for the intra-contract variable is an intra-contract variable read request or an intra-contract variable storage request.

When the data access request is the intra-contract variable read request, the process of the virtual machine instance executing the to-be-processed transaction request is described below.

In step 1, the virtual machine instance running in the blockchain node acquires the to-be-processed transaction request.

In step 2, in the process of executing the to-be-processed transaction request, the virtual machine instance generates an intra-contract variable read request for the intra-contract variable and transmits the intra-contract variable read request to the interface module.

In step 3, the interface module performs the instruction conversion according to the intra-contract variable read request to determine the intra-contract variable read interface corresponding to the function of the intra-contract variable read request.

In step 4, the interface module calls the intra-contract variable read interface for the contract space in the data storage space of the blockchain to access the intra-contract variables, the target access data, in the contract space and feeds back an access result to the virtual machine instance.

Specifically, the interface module transmits incoming parameters to the intra-contract variable read interface. The incoming parameters of the intra-contract variable read interface include an account identifier and a variable identifier; a combination of the account identifier and the variable identifier serves as a key value in a key-value pair and is used for querying and reading a value of a to-be-read variable. Since the contract data is stored in the form of the key-value pair in the data storage space, the account identifier as the prefix in the key value is combined with respective identifiers of the contract bytecode and the intra-contract variable to be stored as the key value in the key field, the intra-contract variable in a contract account stored in the data storage space can be uniquely determined according to the incoming parameters, the account identifier and variable identifier, the intra-contract variable in the value field is read, and the access result is fed back to the virtual machine instance.

Exemplarily, the interface module calls the intra-contract variable read interface (GetStorage) through GetStorage(address crypto.Address, key binary.Word256) ([]byte, error).

The incoming parameter address crypto.Address represents a contract identifier and is optionally a contract address or a contract name. The incoming parameter key binary.Word256 represents the variable identifier and is a variable name.

When the data access request is the intra-contract variable storage request, the process of the virtual machine instance executing the to-be-processed transaction request is described below.

In step 1, the virtual machine instance running in the blockchain node acquires the to-be-processed transaction request.

In step 2, in the process of executing the to-be-processed transaction request, the virtual machine instance generates an intra-contract variable storage request for the intra-contract variable and transmits the intra-contract variable storage request to the interface module.

In step 3, the interface module performs the instruction conversion according to the intra-contract variable storage request to determine the intra-contract variable storage interface corresponding to the function of the intra-contract variable storage request.

The interface module calls the intra-contract variable storage interface for the contract space in the data storage space of the blockchain to access the intra-contract variables, the target access data, in the contract space and feeds back the access result to the virtual machine instance.

Specifically, the interface module transmits incoming parameters to the intra-contract variable storage interface. The incoming parameters of the intra-contract variable storage interface include an account identifier, a variable identifier and a variable value; a combination of the account identifier and the variable identifier serves as a key value of a key-value pair and is used for querying a key-value pair where a to-be-stored variable is located and writing the variable value into the value field of the key-value pair. Since the contract data is stored in the form of the key-value pair in the data storage space, the account identifier as the prefix in the key value is combined with the respective identifiers of the contract bytecode and the intra-contract variables to be stored as the key value in the key field. The key-value pair where the to-be-stored variable is located is queried according to the incoming parameters, the account identifier and the variable identifier so that the intra-contract variable in the contract account stored in the data storage space can be uniquely determined and the variable value is written into the value field of the key-value pair.

Exemplarily, the interface module calls the intra-contract variable storage interface (SetStorage) through SetStorage (address crypto.Address, key binary.Word256, value []byte) (error).

The incoming parameter address crypto.Address represents the contract identifier and is optionally the contract address or the contract name. The incoming parameter key binary.Word256 represents the variable identifier and is the variable name. The incoming parameter value []byte is an incoming parameter of the intra-contract variable storage interface and represents the variable value.

Different contract addresses are used for distinguishing different contracts so that contract data in contract accounts are isolated. Even if two different contract accounts have the same key value, the contract accounts are stored at different positions of the blockchain. In this manner, intra-contract variables in different contract accounts are isolated in space.

In the embodiment of the present application, the virtual machine instance generates the data access request for the intra-contract variable and transmits the data access request to the interface module in the process of executing the to-be-processed transaction request, and the interface module calls the blockchain access interface for the data storage space of the blockchain to access the intra-contract variables and feeds back the access result to the virtual machine instance. In the present application, the virtual machine instance and the interface module coordinate with each other to jointly complete the to-be-processed transaction request so that data access operations between different blockchains are achieved, the problem of migration of an Ethereum Virtual Machine to another blockchain system is solved, and the compatibility with Ethereum and other blockchain technologies is improved.

FIG. 2 is a schematic diagram of an Ethereum Virtual Machine-based transaction processing method according to an embodiment of the present application. This embodiment is an optimization of the preceding embodiments and is a preferably embodiment. A complete process of executing the to-be-processed transaction request is described.

Referring to FIG. 2, the Ethereum Virtual Machine-based transaction processing method provided in this embodiment includes steps described below.

In step 1, the virtual machine instance running in the blockchain node acquires the to-be-processed transaction request.

Optionally, the to-be-processed transaction request is a deal transaction request. The deal transaction request includes four parameters: a contract caller (From), a called contract (To), an incoming token for calling the contract (Amout) and a method signature of a method for calling the contract and an incoming parameter (Data). The blockchain node inputs From, To, Amout and Data in the deal transaction request to the virtual machine instance, which exist as Caller, Callee, Value and Input in the virtual machine instance.

Specifically, the virtual machine instance running in the blockchain node acquires the to-be-processed transaction request initiated by the contract caller. The to-be-processed transaction request includes a contract caller identifier, a to-be-called contract identifier, a contract parameter and a token. In the case where the to-be-processed transaction request is the deal transaction request, Caller in the virtual machine instance is the contract caller identifier, Callee is the to-be-called contract identifier, Value is the token, and Input is the contract parameter.

In step 2, the virtual machine instance calls an on-chain account query interface (Acc Exists) and an on-chain contract query interface (Contract Exists) in the interface module according to Caller and Callee to query whether the to-be-called contract and the contract caller exist in the data storage space of the blockchain, respectively.

Specifically, after the virtual machine instance receives the deal transaction request, the virtual machine instance generates an on-chain account query request and an on-chain contract query request of the caller according to the contract caller identifier and the to-be-called contract identifier in the deal transaction request respectively and transmits the on-chain account query request and the on-chain contract query request to the interface module. Interfaces for the virtual machine instance are encapsulated in the interface module. The interface module calls the on-chain account query interface for the account space of the blockchain according to the on-chain account query request to query whether a contract caller account exists on the chain. The interface module calls the on-chain contract query interface for the contract space of the blockchain according to the on-chain contract query request to query whether the to-be-called contract exists on the chain. The interface module feeds back a query result of the contract caller account and the to-be-called contract to the virtual machine instance.

In step 3, if both the contract caller and the to-be-called contract exist in the data storage space of the blockchain, the virtual machine instance calls a contract bytecode read interface (Get Code) in the interface module to acquire a contract bytecode (Code) stored in the contract space (Contract Store).

Specifically, when the acquired query result fed back by the interface module is that an on-chain account and an on-chain contract exist, the virtual machine instance generates a contract bytecode read request according to the to-be-called contract identifier and transmits the contract bytecode read request to the interface module. The interface module calls the contract bytecode read interface for the contract space of the blockchain, reads the contract bytecode of the to-be-called contract, and feeds back the read contract bytecode to the virtual machine instance.

In step 4, the virtual machine instance transmits Caller, Value, Input and Code to a virtual machine instance execution module (EVM Execute) for EVM Execute to execute the deal transaction request.

In steps 5 and 6, EVM Execute executes the deal transaction request according to Caller, Value, Input and Code, and in the process of executing the deal transaction request, the reading and storage of intra-contract variables are involved so that a contract state is changed.

Specifically, the virtual machine instance executes the to-be-processed transaction request according to the contract bytecode fed back by the interface module and the contract parameter and the token in the to-be-processed transaction request, and in the process of executing the to-be-processed transaction request, the virtual machine instance generates the intra-contract variable read request and transmits the intra-contract variable read request to the interface module. The intra-contract variables include variables and variable values in a running process of a smart contract. The interface module calls the intra-contract variable read interface for the contract space of the blockchain, reads a value of an intra-contract variable, and feeds back the read value to the virtual machine instance.

In the process of executing the to-be-processed transaction request, the virtual machine instance generates the intra-contract variable storage request and transmits the intra-contract variable storage request to the interface module. The interface module calls the intra-contract variable storage interface for the contract space of the blockchain to write a value of an intra-contract variable. It is to be noted that connection lines and reference numerals in FIG. 2 indicate data flows in steps identified by the reference numerals.

In the embodiment of the present application, the virtual machine instance generates a data access request for the intra-contract variable and transmits the data access request to the interface module in the process of executing the to-be-processed transaction request, and the interface module calls the blockchain access interface for the data storage space of the blockchain to access the intra-contract variables and feeds back an access result to the virtual machine instance. In the present application, the virtual machine instance and the interface module coordinate with each other to jointly complete the to-be-processed transaction request so that data access operations between different blockchains are achieved, the problem of migration of an Ethereum Virtual Machine to another blockchain system is solved, and the compatibility with Ethereum and other blockchain technologies is improved.

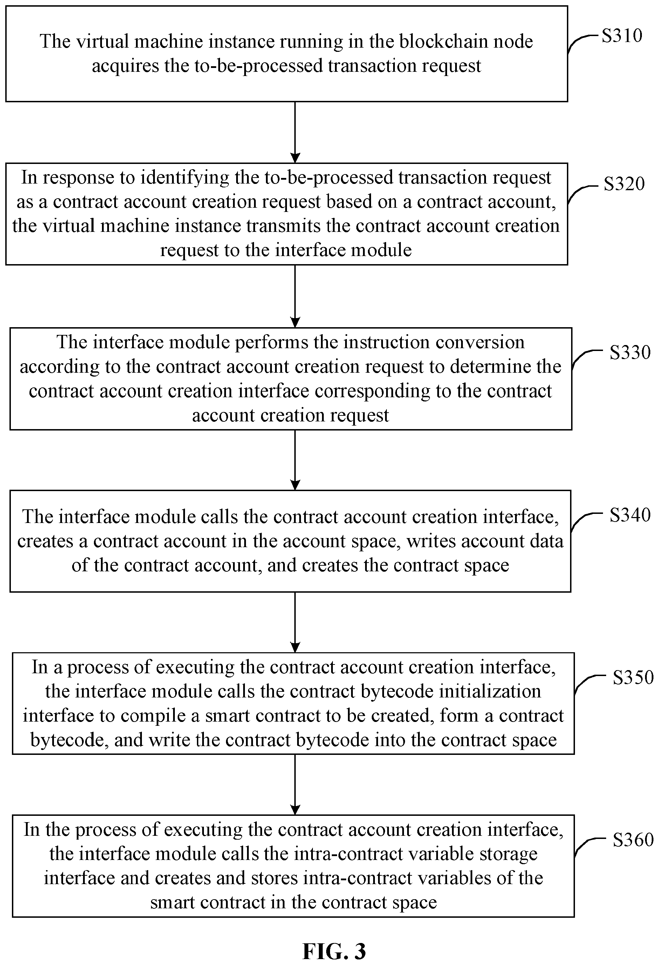

FIG. 3 is a schematic diagram of another Ethereum Virtual Machine-based transaction processing method according to an embodiment of the present application. This embodiment is an optional solution provided based on the preceding embodiment. Specifically, this embodiment is a refinement of the process of executing the to-be-processed transaction request in the case where the to-be-processed transaction request is a contract account creation request based on a contract account.

Referring to FIG. 3, the Ethereum Virtual Machine-based transaction processing method provided in this embodiment includes steps described below.

In S310, the virtual machine instance running in the blockchain node acquires the to-be-processed transaction request.

In S320, in response to identifying the to-be-processed transaction request as the contract account creation request based on the contract account, the virtual machine instance transmits the contract account creation request to the interface module.

The contract account creation request based on the contract account refers to a request for creating a new contract account. The contract account creation request includes writing both account data and contract data of the newly-created contract account. The contract account creation request based on the contract account includes writing the account data of the newly-created contract account and a smart contract.

The virtual machine instance executes the contract account creation request based on the contract account to generate the data access request for a target contract account. Since the contract account includes the contract data and the account data, specifically, an account data write request and a contract data write request are generated for the contract account. The account data write request is to write the account data into the account space of the contract account. The contract data write request is to write the contract data into the contract space of the contract account. The contract space and the account space are isolated in space.

In S330, the interface module performs the instruction conversion according to the contract account creation request to determine the contract account creation interface corresponding to the contract account creation request.

The interface module identifies a virtual machine instruction to which the contract account creation request belongs and an instruction parameter and determines the blockchain access interface corresponding to the contract account creation request according to a preset mapping relationship between virtual machine instructions and interfaces.

In S340, the interface module calls the contract account creation interface, creates the contract account in the account space, writes the account data of the contract account, and creates the contract space.

Generally, the account space exists on the blockchain. Therefore, after receiving the contract account creation request, the interface module may determine a target account space according to the contract account creation request, call the contract account creation interface for the account space of the blockchain, create the contract account and write the account data of the contract account in the account space. However, the contract space is a space for storing the contract data and needs to be created when the contract account is created.

In S350, in a process of executing the contract account creation interface, the interface module calls a contract bytecode initialization interface to compile a smart contract to be created, form a contract bytecode, and write the contract bytecode into the contract space.

The contract bytecode initialization interface is an interface for compiling the smart contract to be created to obtain the contract bytecode and writing the bytecode into the contract space.

After the contract space is created, the contract data in the contract space needs to be initialized. In the process of executing the contract account creation interface, the interface module calls the contract bytecode initialization interface, compiles the smart contract to form the contract bytecode, and writes the contract bytecode into the contract space.

In S360, in the process of executing the contract account creation interface, the interface module calls an intra-contract variable storage interface and creates and stores intra-contract variables of the smart contract in the contract space.

Since there are variables in the smart contract and these variables are to be operated in a process of executing the smart contract, the variables and variable values involved in the smart contract also need to be stored in the contract space. In the process of executing the contract account creation interface, the interface module calls the intra-contract variable storage interface and creates and stores the intra-contract variables of the smart contract in the contract space.

According to the technical solution in the embodiment of the present application, a contract-account creation solution based on the contract account is provided through coordination of the virtual machine instance and the interface module, which can isolate the account space and the contract space and be used for a user to create a contract account according to a requirement of the user, thereby improving the business expansibility of the blockchain.

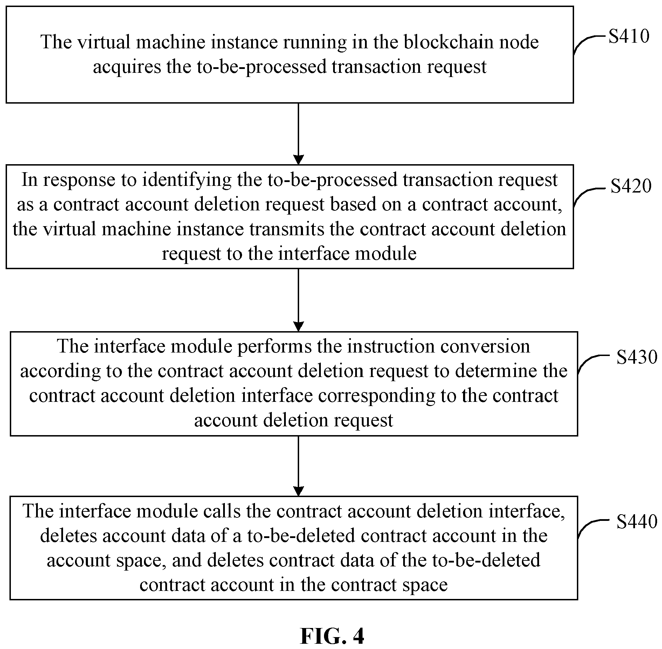

FIG. 4 is a schematic diagram of another Ethereum Virtual Machine-based transaction processing method according to an embodiment of the present application. This embodiment is an optional solution provided based on the preceding embodiment. Specifically, this embodiment is a refinement of the process of executing the to-be-processed transaction request in the case where the to-be-processed transaction request is a contract account deletion request based on a contract account.

Referring to FIG. 4, the Ethereum Virtual Machine-based transaction processing method provided in this embodiment includes steps described below.

In S410, the virtual machine instance running in the blockchain node acquires the to-be-processed transaction request.

In S420, in response to identifying the to-be-processed transaction request as the contract account deletion request based on the contract account, the virtual machine instance transmits the contract account deletion request to the interface module.

The contract account deletion request based on the contract account refers to a request for deleting an existing contract account from contract accounts. The contract account deletion request based on the contract account includes deleting both account data and contract data of a target contract account. The contract account deletion request based on the contract account includes an account identifier of a to-be-deleted contract account.

The virtual machine instance executes the contract account deletion request based on the contract account to generate the data access request for the target contract account. Since the contract account includes the contract data and the account data, specifically, an account data write request and a contract data write request are generated for the contract account. The account data write request is to write the account data into the account space of the contract account. The contract data write request is to write the contract data into the contract space of the contract account. The contract space and the account space are isolated in space. Deleting the contract account may be emptying both the contract data and the account data in the contract account or may be emptying only the account identifier fields of both the contract data and the account data so that the contract account cannot be indexed by other users, thereby achieving the purpose of deleting the contract account.

In S430, the interface module performs the instruction conversion according to the contract account deletion request to determine the contract account deletion interface corresponding to the contract account deletion request.

The interface module identifies a virtual machine instruction to which the contract account deletion request belongs and an instruction parameter and determines the blockchain access interface corresponding to the contract account deletion request according to a preset mapping relationship between virtual machine instructions and interfaces.

In S440, the interface module calls the contract account deletion interface, deletes the account data of the to-be-deleted contract account in the account space, and deletes the contract data of the to-be-deleted contract account in the contract space. Since the contract account includes the contract data and the account data and the contract data and the account data are respectively stored in the contract space and the account space, when deleting the contract account, the interface module calls the contract account deletion interface according to the contract account deletion request, deletes the account data of the to-be-deleted contract account in the account space, and deletes the contract data of the to-be-deleted contract account in the contract space.

In the embodiment of the present application, a contract-account deletion solution based on the contract account is provided through the coordination of the virtual machine instance and the interface module so that the user can delete a contract account when the user does not expect the contract account to be used by another user or when the contract account is discarded, thereby avoiding the waste of block storage resources and improving the privacy of the contract account.

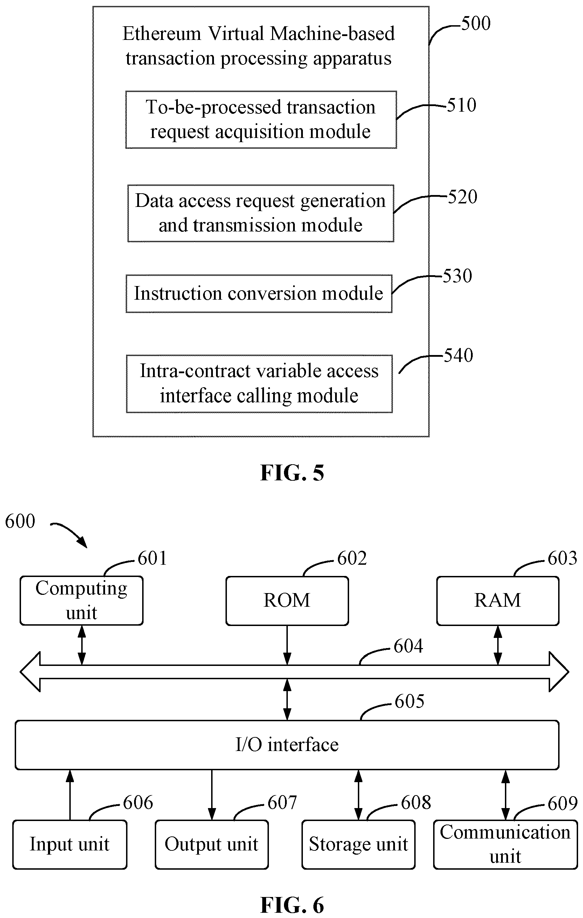

FIG. 5 is a schematic diagram of an Ethereum Virtual Machine-based transaction processing apparatus according to an embodiment of the present application. Referring to FIG. 5, the embodiment of the present application discloses the Ethereum Virtual Machine-based transaction processing apparatus 500. The apparatus 500 may include a to-be-processed transaction request acquisition module 510, a data access request generation and transmission module 520, an instruction conversion module 530 and an intra-contract variable access interface calling module 540.

The to-be-processed transaction request acquisition module 510 is configured to cause a virtual machine instance running in a blockchain node to acquire a to-be-processed transaction request.

The data access request generation and transmission module 520 is configured to cause the virtual machine instance to: in a process of executing the to-be-processed transaction request, generate a data access request for an intra-contract variable and transmit the data access request to an interface module. The data access request includes a data read request and/or a data write request.

The instruction conversion module 530 is configured to cause the interface module to perform instruction conversion according to the data access request to determine an intra-contract variable access interface corresponding to a function of the data access request.

The intra-contract variable access interface calling module 540 is configured to cause the interface module to call the intra-contract variable access interface for a contract space in a data storage space of a blockchain to access intra-contract variables in the contract space and feed back an access result to the virtual machine instance.

The intra-contract variables include a parameter variable and a variable value in a smart contract, and the intra-contract variables in the contract space are used for updating on-chain data of the blockchain. According to the technical solution in the embodiment of the present application, when an Ethereum Virtual Machine is migrated to another blockchain system for transaction processing, the interface module is constructed to perform the instruction conversion on the data access request in the form of an Ethereum Virtual Machine instruction and determine a blockchain access interface corresponding to the function of the data access request so that a heterogeneous data storage space can be accessed. Therefore, the blockchain is open and componentized, thereby reducing the difficulty in migrating the Ethereum Virtual Machine to another blockchain system. Additionally, in the embodiment of the present application, contract data and account data are stored separately on the blockchain, which is compatible with data storage structures of different types and facilitates operations of another blockchain on different data. In the embodiment of the present application, the interface module is constructed and the contract data and the account data are stored separately on the blockchain so that the problem of migration of the Ethereum Virtual Machine to another blockchain system is solved and the compatibility with Ethereum and other blockchain technologies is improved. In the embodiment of the present application, the virtual machine instance and the interface module coordinate with each other to jointly complete the to-be-processed transaction request so that intra-contract variable access operations between different blockchains are achieved, the problem of the migration of the Ethereum Virtual Machine to another blockchain system is solved, and the compatibility with Ethereum and other blockchain technologies is improved.

Optionally, the data storage space of the blockchain includes an account space and the contract space, the account space is used for storing account data in an external account and account data in a contract account, and the contract space is used for storing contract data in the contract account. The contract data includes an account identifier, a contract bytecode and an intra-contract variable.

Optionally, the account data includes an account identifier, a deal sequence number, an account public key and a token, the account data is stored in a form of a key-value pair, the account identifier is stored as a key value in a key field, and the deal sequence number, the account public key and the token are stored in a value field.

Optionally, the account identifier is a contract call identifier of a smart contract; the contract data is stored in the form of the key-value pair, the account identifier is combined, as a prefix in a key value, with respective identifiers of the contract bytecode and the intra-contract variables to be stored in a key field, and the contract bytecode and the intra-contract variables are stored in a value field.

Optionally, the intra-contract variable access interface includes an intra-contract variable storage interface and an intra-contract variable read interface.

Optionally, incoming parameters of the intra-contract variable read interface include the account identifier and a variable identifier, and a combination of the account identifier and the variable identifier serves as a key value of the key-value pair and is used for querying and reading a value of a to-be-read variable.

Optionally, incoming parameters of the intra-contract variable storage interface include an account identifier, a variable identifier and a variable value; a combination of the account identifier and the variable identifier serves as a key value of a key-value pair and is used for querying a key-value pair where a to-be-stored variable is located and writing the variable value into the value field of the key-value pair.

Optionally, the intra-contract variable storage interface and the intra-contract variable read interface each are a blockchain access interface, and the blockchain access interface further includes at least one of the following blockchain write interfaces: a contract account creation interface, a contract bytecode initialization interface or a contract account deletion interface.

Optionally, the apparatus further includes a contract account creation request transmission module, a contract account creation interface determination module, a contract account creation module, a contract bytecode initialization interface calling module and an intra-contract variable storage interface calling module.

The contract account creation request transmission module is configured to cause the virtual machine instance to: in response to identifying the to-be-processed transaction request as a contract account creation request based on the contract account, transmit the contract account creation request to the interface module after the virtual machine instance running in the blockchain node acquires the to-be-processed transaction request.

The contract account creation interface determination module is configured to cause the interface module to perform the instruction conversion according to the contract account creation request to determine a contract account creation interface corresponding to the contract account creation request.

The contract account creation module is configured to cause the interface module to call the contract account creation interface, create a contract account in the account space, write account data of the contract account, and create the contract space.

The contract bytecode initialization interface calling module is configured to cause the interface module to: in a process of executing the contract account creation interface to compile a smart contract to be created, call the contract bytecode initialization interface, form a contract bytecode, and write the contract bytecode into the contract space.

The intra-contract variable storage interface calling module is configured to cause the interface module to: in the process of executing the contract account creation interface, call the intra-contract variable storage interface, and create and store intra-contract variables of the smart contract in the contract space.

Optionally, the apparatus further includes a contract account deletion request transmission module, a contract account deletion interface determination module and a contract account deletion module.

The contract account deletion request transmission module is configured to cause the virtual machine instance to: in response to identifying the to-be-processed transaction request as a contract account deletion request based on the contract account, transmit the contract account deletion request to the interface module after the virtual machine instance running in the blockchain node acquires the to-be-processed transaction request.

The contract account deletion interface determination module is configured to cause the interface module to perform the instruction conversion according to the contract account deletion request to determine the contract account deletion interface corresponding to the contract account deletion request.

The contract account deletion module is configured to cause the interface module to call the contract account deletion interface, delete account data of a to-be-deleted contract account in the account space, and delete contract data of the to-be-deleted contract account in the contract space.

Optionally, the apparatus further includes an on-chain data update module. The on-chain data update module is configured to: after the virtual machine instance executes the to-be-processed transaction request, call a blockchain access interface, and update the on-chain data of the blockchain according to the intra-contract variables in the contract space.

The Ethereum Virtual Machine-based transaction processing apparatus provided in this embodiment of the present application can perform the Ethereum Virtual Machine-based transaction processing method provided in any one of embodiments of the present application and has function modules and beneficial effects corresponding to the performed Ethereum Virtual Machine-based transaction processing method.

According to embodiments of the present application, the present application further provides an electronic device, a readable storage medium and a computer program product.

FIG. 6 is a block diagram illustrative of an exemplary electronic device 600 that may be used for implementing embodiments of the present application. Electronic devices are intended to represent various forms of digital computers, for example, laptop computers, desktop computers, worktables, personal digital assistants, servers, blade servers, mainframe computers and other applicable computers. Electronic devices may further represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 6, the device 600 includes a computing unit 601. The computing unit 601 may perform various types of appropriate operations and processing based on a computer program stored in a read-only memory (ROM) 602 or a computer program loaded from a storage unit 608 to a random-access memory (RAM) 603. Various programs and data required for operations of the device 600 may also be stored in the RAM 603. The computing unit 601, the ROM 602 and the RAM 603 are connected to each other through a bus 604. An input/output (I/O) interface 605 is also connected to the bus 604.

Multiple components in the electronic device 600 are connected to the I/O interface 605. The multiple components include an input unit 606 such as a keyboard and a mouse, an output unit 607 such as various types of displays and speakers, the storage unit 608 such as a magnetic disk and an optical disk, and a communication unit 609 such as a network card, a modem and a wireless communication transceiver. The communication unit 609 allows the device 600 to exchange information/data with other devices over a computer network such as the Internet and/or various telecommunications networks.

The computing unit 601 may be various general-purpose and/or dedicated processing components having processing and computing capabilities. Some examples of the computing unit 601 include, but are not limited to, central processing units (CPUs), graphics processing units (GPUs), various dedicated artificial intelligence (AI) computing chips, various computing units running machine learning models and algorithms, digital signal processors (DSPs) and any suitable processors, controllers and microcontrollers. The computing unit 601 performs various methods and processing described above, such as the Ethereum Virtual Machine-based transaction processing method. For example, in some embodiments, the Ethereum Virtual Machine-based transaction processing method may be implemented as a computer software program tangibly contained in a machine-readable medium such as the storage unit 608. In some embodiments, part or all of a computer program may be loaded and/or installed on the device 600 via the ROM 602 and/or the communication unit 609. When the computer program is loaded onto the RAM 603 and executed by the computing unit 601, one or more steps of the preceding Ethereum Virtual Machine-based transaction processing method may be performed. Alternatively, in other embodiments, the computing unit 601 may be configured, in any other suitable manner (for example, by means of firmware), to perform the Ethereum Virtual Machine-based transaction processing method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software and/or combinations thereof. The various embodiments may include implementations in one or more computer programs. The one or more computer programs are executable and/or interpretable on a programmable system including at least one programmable processor. The programmable processor may be a dedicated or general-purpose programmable processor for receiving data and instructions from a memory system, at least one input device and at least one output device and transmitting data and instructions to the memory system, the at least one input device and the at least one output device.

Program codes for implementing the methods of the present disclosure may be compiled in any combination of one or more programming languages. These program codes may be provided for a processor or controller of a general-purpose computer, a dedicated computer or another programmable data processing device such that the program codes, when executed by the processor or controller, cause functions/operations specified in the flowcharts and/or block diagrams to be implemented. The program codes may be executed in whole on a machine, executed in part on a machine, executed, as a stand-alone software package, in part on a machine and in part on a remote machine, or executed in whole on a remote machine or a server.

In the context of the present disclosure, a machine-readable medium may be a tangible medium that may include or store a program that is used by or in conjunction with a system, apparatus or device that executes instructions. The machine-readable medium may be a machine-readable signal medium or a machine-readable storage medium. Machine-readable media may include, but are not limited to, electronic, magnetic, optical, electromagnetic, infrared or semiconductor systems, apparatuses or devices or any suitable combinations thereof. More specific examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device or any suitable combination thereof.

In order that interaction with a user is provided, the systems and techniques described herein may be implemented on a computer. The computer has a display device (for example, a cathode-ray tube (CRT) or a liquid-crystal display (LCD) monitor) for displaying information to the user and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host, which is a host product in a cloud computing service system, so as to solve the defects of difficult management and weak business scalability in traditional physical hosts and virtual private server (VPS) services.

It is to be understood that various forms of the preceding flows may be used, with steps reordered, added or removed. For example, the steps described in the present disclosure may be executed in parallel, in sequence or in a different order as long as the desired result of the technical solution disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the principle of the present disclosure are within the scope of the present disclosure.

## Claims

1. A transaction processing method based on an Ethereum Virtual Machine, the method being applied to a blockchain node and comprising
acquiring (S 110, S310, 5410), by an Ethereum virtual machine instance running in the Ethereum Virtual Machine deployed in the blockchain node, a to-be-processed transaction request;
in a process of executing the to-be-processed transaction request, generating (S120), by the Ethereum virtual machine instance, a data access request for an intra-contract variable and transmitting (S120) the data access request to an interface module; wherein the data access request comprises a data read request and/or a data write request;
performing (S130), by the interface module, instruction conversion according to the data access request to determine an intra-contract variable access interface corresponding to a function of the data access request; and
calling (S140), by the interface module, the intra-contract variable access interface to access the intra-contract variable in a contract space in a data storage space of a non-Ethereum blockchain and feeding back an access result to the Ethereum virtual machine instance, wherein the access result comprises a value of the intra-contract variable in the contract space of the non-Ethereum blockchain or an access state of success or failure for accessing the intra-contract variable in the contract space of the non-Ethereum blockchain, the intra-contract variable refers to data involved by the to-be-processed transaction request;
wherein the intra-contract variable comprises a parameter variable and a variable value in a smart contract, and the intra-contract variable in the contract space is used for updating on-chain data of the non-Ethereum blockchain; and
wherein the data storage space of the non-Ethereum blockchain is used for storing account data and contract data in isolation, the data storage space of the non-Ethereum blockchain comprises an account space and the contract space, the account space is used for storing account data in an external account and account data in a contract account, and the contract space is used for storing the contract data in the contract account; wherein the contract data comprises an account identifier, a contract bytecode and the intra-contract variable.

2. The method of claim 1, wherein the account data comprises an account identifier, a deal sequence number, an account public key and a token; the account data is stored in a form of a key-value pair, the account identifier is stored as a key value in a key field, and the deal sequence number, the account public key and the token are stored in a value field.

3. The method of claim 1, wherein the account identifier is a contract call identifier of a smart contract; the contract data is stored in a form of a key-value pair, the account identifier is combined, as a prefix in a key value, with respective identifiers of the contract bytecode and the intra-contract variable to be stored in a key field, and the contract bytecode and the intra-contract variable are stored in a value field.

4. The method of claim 3, wherein the intra-contract variable access interface comprises an intra-contract variable storage interface and an intra-contract variable read interface.

5. The method of claim 4, wherein incoming parameters of the intra-contract variable read interface comprise the account identifier and a variable identifier; and a combination of the account identifier and the variable identifier serves as a key value of the key-value pair and is used for querying and reading a value of a to-be-read variable.

6. The method of claim 4, wherein incoming parameters of the intra-contract variable storage interface comprise the account identifier, a variable identifier and a variable value; and a combination of the account identifier and the variable identifier serves as a key value of the key-value pair and is used for querying a key-value pair where a to-be-stored variable is located and writing the variable value into the value field of the key-value pair.

7. The method of claim 4, wherein the intra-contract variable storage interface and the intra-contract variable read interface each are a blockchain access interface, and the blockchain access interface further comprises at least one of the following blockchain write interfaces:
a contract account creation interface;
a contract bytecode initialization interface; or
a contract account deletion interface.

8. The method of claim 7, after acquiring (S110, S310, S410), by the Ethereum virtual machine instance running in the Ethereum Virtual Machine deployed in the blockchain node, the to-be-processed transaction request, further comprising:
in response to identifying the to-be-processed transaction request as a contract account creation request based on the contract account, transmitting (S320), by the Ethereum virtual machine instance, the contract account creation request to the interface module;
performing (S330), by the interface module, the instruction conversion according to the contract account creation request to determine the contract account creation interface corresponding to the contract account creation request;
calling (S340), by the interface module, the contract account creation interface, creating a new contract account in the account space, and writing account data of the newly-created contract account;
in a process of executing the contract account creation interface, calling (S350), by the interface module, the contract bytecode initialization interface to compile a smart contract to be created, form a contract bytecode, and write the contract bytecode into the contract space; and
in the process of executing the contract account creation interface, calling (S360), by the interface module, the intra-contract variable storage interface and creating and storing an intra-contract variable of the smart contract in the contract space.

9. The method of claim 7, after acquiring (S110, S310, 5410), by the Ethereum virtual machine instance running in the Ethereum Virtual Machine deployed in the blockchain node, the to-be-processed transaction request, further comprising:
in response to identifying the to-be-processed transaction request as a contract account deletion request based on the contract account, transmitting (S420), by the Ethereum virtual machine instance, the contract account deletion request to the interface module;
performing (S430), by the interface module, the instruction conversion according to the contract account deletion request to determine the contract account deletion interface corresponding to the contract account deletion request; and
calling (S440), by the interface module, the contract account deletion interface, deleting account data of a to-be-deleted contract account in the account space, and deleting contract data of the to-be-deleted contract account in the contract space.

10. The method of claim 1, further comprising:
after the Ethereum virtual machine instance executes the to-be-processed transaction request, calling a blockchain access interface and updating the on-chain data of the non-Ethereum blockchain according to the intra-contract variable in the contract space.

11. An transaction processing apparatus (500) based on an Ethereum Virtual Machine, the apparatus being applied to a blockchain node and comprising:
a to-be-processed transaction request acquisition module (510), which is configured to cause an Ethereum virtual machine instance running in the Ethereum Virtual Machine deployed in the blockchain node to acquire a to-be-processed transaction request;
a data access request generation and transmission module (S520), which is configured to cause the Ethereum virtual machine instance to: in a process of executing the to-be-processed transaction request, generate a data access request for an intra-contract variable and transmit the data access request to an interface module; wherein the data access request comprises a data read request and/or a data write request;
an instruction conversion module (530), which is configured to cause the interface module to perform instruction conversion according to the data access request to determine an intra-contract variable access interface corresponding to a function of the data access request; and
an intra-contract variable access interface calling module (540), which is configured to cause the interface module to call the intra-contract variable access interface to access the intra-contract variable in a contract space in a data storage space of a non-Ethereum blockchain and feed back an access result to the Ethereum virtual machine instance, wherein the access result comprises a value of the intra-contract variable in the contract space of the non-Ethereum blockchain or an access state of success or failure for accessing the intra-contract variable in the contract space of the non-Ethereum blockchain, the intra-contract variable refers to data involved by the to-be-processed transaction request;
wherein the intra-contract variable comprises a parameter variable and a variable value in a smart contract, and the intra-contract variable in the contract space is used for updating on-chain data of the non-Ethereum blockchain; and
wherein the data storage space of the non-Ethereum blockchain is used for storing account data and contract data in isolation, the data storage space of the non-Ethereum blockchain comprises an account space and the contract space, the account space is used for storing account data in an external account and account data in a contract account, and the contract space is used for storing the contract data in the contract account; wherein the contract data comprises an account identifier, a contract bytecode and the intra-contract variable.

12. An electronic device (600), comprising:
at least one processor; and
a memory communicatively connected to the at least one processor.
wherein the memory stores an instruction executable by the at least one processor, and the instruction is executed by the at least one processor to enable the at least one processor to perform the method of any one of claims 1 to 11.

13. A non-transitory computer-readable storage medium storing a computer instruction, wherein the computer instruction is configured to cause a computer to perform the method of any one of claims 1 to 10.

14. A computer program product, comprising a computer program which, when executed by a processor, implements the method of any one of claims 1 to 10.

## Patentansprüche

1. Transaktionsverarbeitungsverfahren, das auf einer virtuellen Ethereum-Maschine basiert, wobei das Verfahren auf einen Blockkettenknoten angewendet wird und Folgendes umfasst:
Erfassen (S110, S310, S410) einer zu verarbeitenden Transaktionsanforderung durch eine virtuelle Ethereum-Maschineninstanz, die in der virtuellen Ethereum-Maschine läuft, die im Blockkettenknoten implementiert ist;
in einem Prozess des Ausführens der zu verarbeitenden Transaktionsanforderung Erzeugen (S120) einer Datenzugriffsanforderung für eine Intravertragsvariable und Übertragen (S120) der Datenzugriffsanforderung zu einem Schnittstellenmodul durch die virtuelle Ethereum-Maschineninstanz; wobei die Datenzugriffsanforderung eine Datenleseanforderung und/oder eine Datenschreibanforderung umfasst;
Durchführen (S130) einer Anweisungsumwandlung durch das Schnittstellenmodul gemäß der Datenzugriffsanforderung, um eine Intravertragsvariablenzugriffsschnittstelle zu bestimmen, die einer Funktion der Datenzugriffsanforderung entspricht; und
Aufrufen (S140) der Intravertragsvariablenzugriffsschnittstelle durch das Schnittstellenmodul, um in einem Vertragsraum in einem Datenspeicherraum einer Nicht-Ethereum-Blockkette auf die Intravertragsvariable zuzugreifen, und Rückmelden eines Zugriffsergebnisses an die virtuelle Ethereum-Maschineninstanz, wobei das Zugriffsergebnis einen Wert der Intravertragsvariable im Vertragsraum der Nicht-Ethereum-Blockkette oder einen Zugriffsstatus des Erfolgs oder des Fehlschlagens für das Zugreifen auf die Intravertragsvariable im Vertragsraum der Nicht-Ethereum-Blockkette umfasst, wobei die Intravertragsvariable Daten betrifft, die in die zu verarbeitende Transaktionsanforderung eingebunden sind;
wobei die Intravertragsvariable eine Parametervariable und einen Variablenwert in einem intelligenten Vertrag umfasst und die Intravertragsvariable im Vertragsraum zum Aktualisieren von in der Nicht-Ethereum-Blockkette befindlichen Daten verwendet wird; und
wobei der Datenspeicherraum der Nicht-Ethereum-Blockkette zum isolierten Speichern von Kontodaten und Vertragsdaten verwendet wird, wobei der Datenspeicherraum der Nicht-Ethereum-Blockkette einen Kontoraum und einen Vertragsraum umfasst, wobei der Kontoraum zum Speichern von Kontodaten in einem externen Konto und von Kontodaten in einem Vertragskonto verwendet wird und der Vertragsraum zum Speichern der Vertragsdaten im Vertragskonto verwendet wird, wobei die Vertragsdaten eine Kontokennung, einen Vertragsbytecode und die Intravertragsvariable umfassen.

2. Verfahren nach Anspruch 1, wobei die Kontodaten eine Kontokennung, eine Geschäftssequenznummer, einen öffentlichen Kontoschlüssel und ein Token umfassen; die Kontodaten in Form eines Schlüssel-Wert-Paares gespeichert werden, die Kontokennung als ein Schlüsselwert in einem Schlüsselfeld gespeichert wird und die Geschäftssequenznummer, der öffentliche Kontoschlüssel und das Token in einem Wertfeld gespeichert werden.

3. Verfahren nach Anspruch 1, wobei die Kontokennung eine Vertragsaufrufskennung eines intelligenten Vertrags ist; die Vertragsdaten in Form eines Schlüssel-Wert-Paares gespeichert werden, die Kontokennung als ein Präfix in einem Schlüsselwert mit jeweiligen Kennungen des Vertragsbytecodes und der in einem Schlüsselfeld zu speichernden Intravertragsvariable kombiniert wird und der Vertragsbytecode und die Intravertragsvariable in einem Wertfeld gespeichert werden.

4. Verfahren nach Anspruch 3, wobei die Intravertragsvariablenzugriffsschnittstelle eine Intravertragsvariablenspeicherschnittstelle und eine Intravertragsvariablenleseschnittstelle umfasst.

5. Verfahren nach Anspruch 4, wobei eingehende Parameter der Intravertragsvariablenleseschnittstelle die Kontokennung und eine Variablenkennung umfassen, und eine Kombination der Kontokennung und der Variablenkennung als ein Schlüsselwert des Schlüssel-Wert-Paares dient und zum Abfragen und Lesen eines Wertes einer zu lesenden Variable verwendet wird.

6. Verfahren nach Anspruch 4, wobei eingehende Parameter der Intravertragsvariablenspeicherschnittstelle die Kontokennung, eine Variablenkennung und einen Variablenwert umfassen; und eine Kombination der Kontokennung und der Variablenkennung als ein Schlüsselwert des Schlüssel-Wert-Paares dient und zum Abfragen eines Schlüssel-Wert-Paares, wo sich eine zu speichernde Variable befindet, und zum Schreiben des Variablenwertes in das Wertfeld des Schlüssel-Wert-Paares verwendet wird.

7. Verfahren nach Anspruch 4, wobei die Intravertragsvariablenspeicherschnittstelle und die Intravertragsvariablenleseschnittstelle jeweils eine Blockkettenzugriffsschnittstelle sind, und die Blockkettenzugriffsschnittstelle ferner mindestens eine der folgenden Blockkettenschreibschnittstellen umfasst:
eine Vertragskontoerstellungsschnittstelle;
eine Vertragsbytecodeinitialisierungsschnittstelle; oder
eine Vertragskontolöschschnittstelle.

8. Verfahren nach Anspruch 7, das nach dem Erfassen (S110, S310, S410) der zu verarbeitenden Transaktionsanforderung durch die virtuelle Ethereum-Maschineninstanz, die in der virtuellen Ethereum-Maschine läuft, die im Blockkettenknoten implementiert ist, ferner Folgendes umfasst:
in Reaktion auf das Identifizieren der zu verarbeitenden Transaktionsanforderung auf Basis des Vertragskontos als eine Vertragskontoerstellungsanforderung Übertragen (S320) der Vertragskontoerstellungsanforderung durch die virtuelle Ethereum-Maschineninstanz zum Schnittstellenmodul;
Durchführen (S330) der Anweisungsumwandlung durch das Schnittstellenmodul gemäß der Vertragskontoerstellungsanforderung, um die Vertragskontoerstellungsschnittstelle gemäß der Vertragskontoerstellungsanforderung zu bestimmen;
Aufrufen (S340) der Vertragskontoerstellungsschnittstelle, Erstellen eines neuen Vertragskontos im Kontoraum und Schreiben von Kontodaten des neu erstellten Vertragskontos durch das Schnittstellenmodul;
in einem Prozess des Ausführens der Vertragskontoerstellungsschnittstelle Aufrufen (S350) der Vertragsbytecodeinitialisierungsschnittstelle durch das Schnittstellenmodul, um einen zu erstellenden intelligenten Vertrag zu kompilieren, einen Vertragsbytecode zu bilden und den Vertragsbytecode in den Vertragsraum zu schreiben; und
im Prozess des Ausführens der Vertragskontoerstellungsschnittstelle Aufrufen (S360) der Intravertragsvariablenspeicherschnittstelle und Erstellen und Speichern einer Intravertragsvariable des intelligenten Vertrags im Vertragsraum durch das Schnittstellenmodul.

9. Verfahren nach Anspruch 7, das nach dem Erfassen (S110, S310, S410) der zu verarbeitenden Transaktionsanforderung durch die virtuelle Ethereum-Maschineninstanz, die in der virtuellen Ethereum-Maschine läuft, die im Blockkettenknoten implementiert ist, ferner Folgendes umfasst:
in Reaktion auf das Identifizieren der zu verarbeitenden Transaktionsanforderung auf Basis des Vertragskontos als eine Vertragskontolöschanforderung Übertragen (S420) der Vertragskontolöschanforderung durch die virtuelle Ethereum-Maschineninstanz zum Schnittstellenmodul;
Durchführen (S430) der Anweisungsumwandlung durch das Schnittstellenmodul gemäß der Vertragskontolöschanforderung, um die Vertragskontolöschschnittstelle gemäß der Vertragskontolöschanforderung zu bestimmen; und
Aufrufen (S440) der Vertragskontolöschschnittstelle, Löschen von Kontodaten eines zu löschenden Vertragskontos im Kontoraum und Löschen von Vertragsdaten des zu löschenden Vertragskontos im Vertragsraum durch das Schnittstellenmodul.

10. Verfahren nach Anspruch 1, das ferner Folgendes umfasst:
nachdem die virtuelle Ethereum-Maschineninstanz die zu verarbeitende Transaktionsanforderung ausgeführt hat, Aufrufen einer Blockkettenzugriffsschnittstelle und Aktualisieren der in der Nicht-Ethereum-Blockkette befindlichen Daten gemäß der Intravertragsvariable im Vertragsraum.

11. Transaktionsverarbeitungseinrichtung (500) auf Basis einer virtuellen Ethereum-Maschine, wobei die Einrichtung auf einen Blockkettenknoten angewendet wird und Folgendes umfasst
ein Erfassungsmodul (510) für eine zu verarbeitende Transaktionsanforderung, das dazu ausgelegt ist zu bewirken, dass eine virtuelle Ethereum-Maschineninstanz, die in der virtuellen Ethereum-Maschine läuft, die im Blockkettenknoten implementiert ist, eine zu verarbeitende Transaktionsanforderung erfasst;
ein Erzeugungs- und Übertragungsmodul (520) für eine Datenzugriffsanforderung, das dazu ausgelegt ist zu bewirken, dass die virtuelle Ethereum-Maschineninstanz Folgendes durchführt: in einem Prozess des Ausführens der zu verarbeitenden Transaktionsanforderung Erzeugen einer Datenzugriffsanforderung für eine Intravertragsvariable und Übertragen der Datenzugriffsanforderung zu einem Schnittstellenmodul durch die virtuelle Ethereum-Maschineninstanz; wobei die Datenzugriffsanforderung eine Datenleseanforderung und/oder eine Datenschreibanforderung umfasst;
ein Anweisungsumwandlungsmodul (530), das dazu ausgelegt ist zu bewirken, dass das Schnittstellenmodul eine Anweisungsumwandlung gemäß der Datenzugriffsanforderung durchführt, um eine Intravertragsvariablenzugriffsschnittstelle zu bestimmen, die einer Funktion der Datenzugriffsanforderung entspricht; und
ein Intravertragsvariablenzugriffsschnittstellenaufrufmodul (540), das dazu ausgelegt ist zu bewirken, dass das Schnittstellenmodul die Intravertragsvariablenzugriffsschnittstelle aufruft, um in einem Vertragsraum in einem Datenspeicherraum einer Nicht-Ethereum-Blockkette auf die Intravertragsvariable zuzugreifen, und ein Zugriffsergebnis an die virtuelle Ethereum-Maschineninstanz rückmeldet, wobei das Zugriffsergebnis einen Wert der Intravertragsvariable im Vertragsraum der Nicht-Ethereum-Blockkette oder einen Zugriffsstatus des Erfolgs oder des Fehlschlagens für das Zugreifen auf die Intravertragsvariable im Vertragsraum der Nicht-Ethereum-Blockkette umfasst, wobei die Intravertragsvariable Daten betrifft, die in die zu verarbeitende Transaktionsanforderung eingebunden sind;
wobei die Intravertragsvariable eine Parametervariable und einen Variablenwert in einem intelligenten Vertrag umfasst und die Intravertragsvariable im Vertragsraum zum Aktualisieren von in der Nicht-Ethereum-Blockkette befindlichen Daten verwendet wird; und
wobei der Datenspeicherraum der Nicht-Ethereum-Blockkette zum isolierten Speichern von Kontodaten und Vertragsdaten verwendet wird, wobei der Datenspeicherraum der Nicht-Ethereum-Blockkette einen Kontoraum und einen Vertragsraum umfasst, wobei der Kontoraum zum Speichern von Kontodaten in einem externen Konto und von Kontodaten in einem Vertragskonto verwendet wird und der Vertragsraum zum Speichern der Vertragsdaten im Vertragskonto verwendet wird, wobei die Vertragsdaten eine Kontokennung, einen Vertragsbytecode und die Intravertragsvariable umfassen.

12. Elektronische Vorrichtung (600), die Folgendes umfasst:
mindestens einen Prozessor; und
einen Speicher, der kommunikativ mit dem mindestens einen Prozessor verbunden ist,
wobei im Speicher eine Anweisung gespeichert ist, die von dem mindestens einen Prozessor ausführbar ist, und die Anweisung von dem mindestens einen Prozessor ausgeführt wird, um es zu ermöglichen, dass der mindestens eine Prozessor das Verfahren nach einem der Ansprüche 1 bis 11 durchführt.

13. Nichttransitorisches computerlesbares Speichermedium, auf dem eine Computeranweisung gespeichert ist, wobei die Computeranweisung dazu ausgelegt ist zu bewirken, dass ein Computer das Verfahren nach einem der Ansprüche 1 bis 10 durchführt.

14. Computerprogrammprodukt, das ein Computerprogramm umfasst, das, wenn es von einem Prozessor ausgeführt wird, das Verfahren nach einem der Ansprüche 1 bis 10 implementiert.

## Revendications

1. Procédé de traitement de transactions sur la base d'une machine virtuelle Ethereum, le procédé étant appliqué à un noeud de chaîne de blocs et comprenant :
l'acquisition (S110, S310, S410), par une instance de machine virtuelle Ethereum fonctionnant dans la machine virtuelle Ethereum déployée dans le noeud de chaîne de blocs, d'une demande de transaction à traiter ;
au cours d'un processus d'exécution de la demande de transaction à traiter, la génération (S120), par l'instance de machine virtuelle Ethereum, d'une demande d'accès aux données pour une variable intra-contrat et la transmission (S120) de la demande d'accès aux données à un module d'interface ; dans lequel la demande d'accès aux données comprend une demande de lecture de données et/ou une demande d'écriture de données ;
la réalisation (S130), par le module d'interface, d'une conversion d'instructions selon la demande d'accès aux données pour déterminer une interface d'accès à la variable intra-contrat correspondant à une fonction de la demande d'accès aux données ; et
l'appel (S140), par le module d'interface, de l'interface d'accès à la variable intra-contrat pour accéder à la variable intra-contrat dans un espace de contrat dans un espace de stockage de données d'une chaîne de blocs non-Ethereum et le renvoi d'un résultat d'accès à l'instance de machine virtuelle Ethereum, dans lequel le résultat d'accès comprend une valeur de la variable intra-contrat dans l'espace de contrat de la chaîne de blocs non-Ethereum ou un état d'accès de succès ou d'échec pour accéder à la variable intra-contrat dans l'espace de contrat de la chaîne de blocs non-Ethereum, la variable intra-contrat se réfère à des données impliquées par la demande de transaction à traiter ;
dans lequel la variable intra-contrat comprend une variable de paramètre et une valeur de variable dans un contrat intelligent, et la variable intra-contrat dans l'espace de contrat est utilisée pour mettre à jour des données sur la chaîne de la chaîne de blocs non-Ethereum ; et
dans lequel l'espace de stockage de données de la chaîne de blocs non-Ethereum est utilisé pour stocker des données de compte et des données de contrat de manière isolée, l'espace de stockage de données de la chaîne de blocs non-Ethereum comprend un espace de compte et l'espace de contrat, l'espace de compte est utilisé pour stocker des données de compte dans un compte externe et des données de compte dans un compte de contrat, et l'espace de contrat est utilisé pour stocker les données de contrat dans le compte de contrat ; dans lequel les données de contrat comprennent un identifiant de compte, un code à octets de contrat et la variable intra-contrat.

2. Procédé selon la revendication 1, dans lequel les données de compte comprennent un identifiant de compte, un numéro de séquence d'opération, une clé publique de compte et un jeton ; les données de compte sont stockées sous la forme d'une paire clé-valeur, l'identifiant de compte est stocké comme valeur de clé dans un champ clé, et le numéro de séquence d'opération, la clé publique de compte et le jeton sont stockés dans un champ valeur.

3. Procédé selon la revendication 1, dans lequel l'identifiant de compte est un identifiant d'appel de contrat d'un contrat intelligent ; les données de contrat sont stockées sous la forme d'une paire clé-valeur, l'identifiant de compte est combiné, comme préfixe dans une valeur de clé, avec des identifiants respectifs du code à octets de contrat et de la variable intra-contrat à stocker dans un champ clé, et le code à octets de contrat et la variable intra-contrat sont stockés dans un champ valeur.

4. Procédé selon la revendication 3, dans lequel l'interface d'accès à la variable intra-contrat comprend une interface de stockage de variables intra-contrat et une interface de lecture de variables intra-contrat.

5. Procédé selon la revendication 4, dans lequel les paramètres entrants de l'interface de lecture de variables intra-contrat comprennent l'identifiant de compte et un identifiant de variable ; et une combinaison de l'identifiant de compte et de l'identifiant de variable sert de valeur de clé de la paire clé-valeur et est utilisée pour interroger et lire une valeur d'une variable à lire.

6. Procédé selon la revendication 4, dans lequel les paramètres entrants de l'interface de stockage de variables intra-contrat comprennent l'identifiant de compte, un identifiant de variable et une valeur de variable ; et une combinaison de l'identifiant de compte et de l'identifiant de variable sert de valeur de clé de la paire clé-valeur et est utilisée pour interroger une paire clé-valeur où une variable à stocker est située et écrire la valeur de variable dans le champ valeur de la paire clé-valeur.

7. Procédé selon la revendication 4, dans lequel l'interface de stockage de variables intra-contrat et l'interface de lecture de variables intra-contrat sont chacune une interface d'accès à la chaîne de blocs, et l'interface d'accès à la chaîne de blocs comprend en outre au moins une des interfaces suivantes d'écriture de chaînes de bloc:
une interface de création de comptes de contrat ;
une interface d'initialisation de codes à octets de contrat ; ou
une interface de suppression de comptes de contrat.

8. Procédé selon la revendication 7, comprenant en outre, après l'acquisition (S110, S310, S410) par l'instance de machine virtuelle Ethereum fonctionnant dans la machine virtuelle Ethereum déployée dans le noeud de chaîne de blocs, de la demande de transaction à traiter :
en réponse à l'identification de la demande de transaction à traiter comme une demande de création de compte de contrat sur la base du compte de contrat, la transmission (S320), par l'instance de machine virtuelle Ethereum, de la demande de création de compte de contrat au module d'interface ;
la réalisation (S330), par le module d'interface, de la conversion d'instructions selon la demande de création de compte de contrat pour déterminer l'interface de création de comptes de contrat correspondant à la demande de création de compte de contrat ;
l'appel (S340), par le module d'interface, de l'interface de création de comptes de contrat, la création d'un nouveau compte de contrat dans l'espace de compte, et l'écriture des données de compte du compte de contrat nouvellement créé ;
au cours d'un processus d'exécution de l'interface de création de comptes de contrat, l'appel (S350), par le module d'interface, de l'interface d'initialisation de codes à octets de contrat pour compiler un contrat intelligent à créer, la formation d'un code à octets de contrat, et l'écriture du code à octets de contrat dans l'espace de contrat ; et
au cours du processus d'exécution de l'interface de création de comptes de contrat, l'appel (S360), par le module d'interface, de l'interface de stockage de variables intra-contrat et la création et le stockage d'une variable intra-contrat du contrat intelligent dans l'espace de contrat.

9. Procédé selon la revendication 7, comprenant en outre, après l'acquisition (S110, S310, S410) par l'instance de machine virtuelle Ethereum fonctionnant dans la machine virtuelle Ethereum déployée dans le noeud de chaîne de blocs, de la demande de transaction à traiter :
en réponse à l'identification de la demande de transaction à traiter comme une demande de suppression de compte de contrat sur la base du compte de contrat, la transmission (S420), par l'instance de machine virtuelle Ethereum, de la demande de suppression de compte de contrat au module d'interface ;
la réalisation (S430), par le module d'interface, de la conversion d'instructions selon la demande de suppression de compte de contrat pour déterminer l'interface de suppression de comptes de contrat correspondant à la demande de suppression de compte de contrat ; et
l'appel (S440), par le module d'interface, de l'interface de suppression de comptes de contrat, la suppression des données de compte d'un compte de contrat à supprimer dans l'espace de compte, et la suppression des données de contrat du compte de contrat à supprimer dans l'espace de contrat.

10. Procédé selon la revendication 1, comprenant en outre :
après que l'instance de machine virtuelle Ethereum a exécuté la demande de transaction à traiter, l'appel d'une interface d'accès à la chaîne de blocs et la mise à jour des données sur la chaîne de la chaîne de blocs non-Ethereum selon la variable intra-contrat dans l'espace de contrat.

11. Appareil de traitement de transactions (500) sur la base d'une machine virtuelle Ethereum, l'appareil étant appliqué à un noeud de chaîne de blocs et comprenant
un module d'acquisition de demande de transaction à traiter (510) qui est configuré pour amener une instance de machine virtuelle Ethereum fonctionnant dans la machine virtuelle Ethereum déployée dans le noeud de chaîne de blocs à acquérir une demande de transaction à traiter ;
un module de génération et de transmission de demande d'accès aux données (S520) qui est configuré pour amener l'instance de machine virtuelle Ethereum à : au cours d'un processus d'exécution de la demande de transaction à traiter, générer une demande d'accès aux données pour une variable intra-contrat et transmettre la demande d'accès aux données à un module d'interface ; dans lequel la demande d'accès aux données comprend une demande de lecture de données et/ou une demande d'écriture de données ;
un module de conversion d'instructions (530) qui est configuré pour amener le module d'interface à réaliser une conversion d'instructions selon la demande d'accès aux données pour déterminer une interface d'accès à la variable intra-contrat correspondant à une fonction de la demande d'accès aux données ; et
un module d'appel d'interface d'accès à la variable intra-contrat (540) qui est configuré pour amener le module d'interface à appeler l'interface d'accès à la variable intra-contrat pour accéder à la variable intra-contrat dans un espace de contrat dans un espace de stockage de données d'une chaîne de blocs non-Ethereum et renvoyer un résultat d'accès à l'instance de machine virtuelle Ethereum, dans lequel le résultat d'accès comprend une valeur de la variable intra-contrat dans l'espace de contrat de la chaîne de blocs non-Ethereum ou un état d'accès de succès ou d'échec pour accéder à la variable intra-contrat dans l'espace de contrat de la chaîne de blocs non-Ethereum, la variable intra-contrat se réfère à des données impliquées par la demande de transaction à traiter ;
dans lequel la variable intra-contrat comprend une variable de paramètre et une valeur de variable dans un contrat intelligent, et la variable intra-contrat dans l'espace de contrat est utilisée pour mettre à jour des données sur la chaîne de la chaîne de blocs non-Ethereum ; et
dans lequel l'espace de stockage de données de la chaîne de blocs non-Ethereum est utilisé pour stocker des données de compte et des données de contrat de manière isolée, l'espace de stockage de données de la chaîne de blocs non-Ethereum comprend un espace de compte et l'espace de contrat, l'espace de compte est utilisé pour stocker des données de compte dans un compte externe et des données de compte dans un compte de contrat, et l'espace de contrat est utilisé pour stocker les données de contrat dans le compte de contrat ; dans lequel les données de contrat comprennent un identifiant de compte, un code à octets de contrat et la variable intra-contrat.

12. Dispositif électronique (600), comprenant :
au moins un processeur ; et
une mémoire connectée de manière communicative au au moins un processeur,
dans lequel la mémoire stocke une instruction exécutable par le au moins un processeur, et l'instruction est exécutée par le au moins un processeur pour permettre au au moins un processeur de réaliser le procédé de l'une quelconque des revendications 1 à 11.

13. Support de stockage non transitoire lisible par ordinateur stockant une instruction informatique, dans lequel l'instruction informatique est configurée pour amener un ordinateur à réaliser le procédé de l'une quelconque des revendications 1 à 10.

14. Produit de programme informatique, comprenant un programme informatique qui, lorsqu'il est exécuté par un processeur, met en œuvre le procédé de l'une quelconque des revendications 1 à 10.
